# EUROPEAN PATENT APPLICATION

(11) **EP 4 769 804 A1**
(43) Date of publication of application: **01.07.2026**
(21) Application number: 24889121.0
(22) Date of filing: 06.11.2024
(51) Int. Cl.: H01M 50/519, H01M 50/502, H01M 50/574, H01R 25/14, H01H 85/00

(54) **BATTERY MODULE AND BATTERY PACK COMPRISING SAME**

(30) Priority: 07.11.2023 KR 20230153135
(71) Applicant: LG Energy Solution, Ltd., Seoul 07335 (KR)
(72) Inventor: KIM, Seok Hee, Daejeon 34122 (KR); KWON, Hee Yong, Daejeon 34122 (KR); AHN, Kwan Hyeuk, Daejeon 34122 (KR); HER, Pill Jun, Daejeon 34122 (KR); PARK, Chan Seo, Daejeon 34122 (KR); AN, Seong Woo, Daejeon 34122 (KR)
(74) Representative: Plasseraud IP
(86) International application number: PCT/KR2024/017419
(87) International publication number: WO 2025/100935

(57) **Abstract**

A battery module according to the present disclosure includes a busbar, a busbar frame configured to mount the busbar, a substrate including a substrate body located adjacent to the busbar frame and a bending portion bent from the substrate body and extended to bring a busbar side end portion into contact with the busbar, and a fuse mounted on the bending portion, wherein the bending portion is located such that a fuse accommodation space is formed between the bending portion and the busbar frame, and wherein the fuse is located in the fuse accommodation space to avoid damage.

## Description

### TECHNICAL FIELD

### CROSS-REFERENCE TO RELATED APPLICATIONS

The present application claims priority to Korean Patent Application No. 10-2023-0153135 filed on November 7, 2023 in the Republic of Korea, the disclosure of which is incorporated herein by reference.

### TECHNICAL FIELD

The present disclosure relates to a battery module and a battery pack. More particularly, the present disclosure relates to a battery module including a substrate electrically connected to a busbar and a fuse mounted on the substrate and a battery pack including the battery module.

### BACKGROUND ART

With the technology development and growing demand for electric vehicles and mobile devices, the demand for secondary batteries as an energy source is increasing. As opposed to primary batteries that can only be used once, secondary batteries can be reused through charging. A secondary battery includes a positive electrode and a negative electrode. When oxidation of a metal occurs at the positive electrode, electricity is produced by movement of electrons released from the metal. The oxidized metal at the positive electrode moves to the negative electrode through an electrolyte and reduction occurs at the negative electrode.

A plurality of secondary batteries may form a battery module. As the battery module is formed, the plurality of secondary batteries connected to each other may form a higher voltage than voltage from a single secondary battery. The battery module may be electrically connected to a Battery Management System (BMS) to monitor the voltage of each of the plurality of secondary batteries, and the BMS may control each of the plurality of secondary batteries based on the monitored voltage so that the voltage of each of the plurality of secondary batteries lies in a predetermined range.

In this instance, each of the plurality of secondary batteries may be electrically connected to a substrate, a connector may be mounted on the substrate, and the BMS and the battery module may be electrically connected by a wire connected to the connector. More specifically, each of the plurality of secondary batteries may be electrically connected to the busbar, and when a busbar side end portion of the substrate contacts the busbar, the substrate may be electrically connected to the plurality of secondary batteries. To transmit information associated with the voltage of the secondary battery obtained through the busbar to the BMS, the busbar side end portion of the substrate and a part of the substrate where the connector is mounted may be connected by a circuit.

When overcurrent flows in the circuit, the BMS may fail, so a fuse may be mounted on the circuit. When overcurrent flows, the fuse may shut off the flow of electricity in the circuit, thereby preventing the flow of electric current from the secondary battery to the BMS. However, because the fuse has a predetermined volume, the volume of the battery module may be increased by the fuse. Accordingly, to prevent the reduction in energy density per volume of the battery module, there is a need to adjust the location of the fuse.

Further, cracks may occur when the fuse collides with other component. When a failure occurs in the fuse, despite overcurrent does not flow in the circuit, the electric current in the circuit may be shut off. Accordingly, the fuse needs to be positioned at a location where cracks are prevented.

### SUMMARY

### TECHNICAL PROBLEM

The present disclosure is designed to solve the above-described problems, and therefore the present disclosure is directed to providing a battery module for minimizing an increase in total volume of the battery module when a fuse is mounted on a substrate and a battery pack including the same.

The present disclosure is further directed to providing a battery module for preventing cracks in the fuse and a battery pack including the same.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

A battery module according to an embodiment of the present disclosure includes a busbar, a busbar frame configured to mount the busbar, a substrate including a substrate body located adjacent to the busbar frame and a bending portion bent from the substrate body and extended to bring a busbar side end portion into contact with the busbar, and a fuse mounted on the bending portion, wherein the bending portion is located such that a fuse accommodation space is formed between the bending portion and the busbar frame, and wherein the fuse is located in the fuse accommodation space to avoid damage.

The fuse may be protruded from the bending portion toward the busbar frame.

The fuse accommodation space may have a width that is equal to or greater than a width of the fuse.

The fuse may be spaced 1.0 mm or more apart from the busbar frame.

The busbar frame may include a fuse facing portion that forms the fuse accommodation space, the fuse facing portion extended farther away from the bending portion as it goes toward the substrate body, and the fuse accommodation space may reduce in width as it is farther away from the substrate body.

The fuse may face a part located at an inner position in an extension direction than an end portion of the fuse facing portion.

The bending portion may include a substrate extension portion bent from the substrate body and extended in a direction facing away from the substrate body, and a fuse mounting portion extended from the substrate extension portion in a direction of getting closer to the substrate body so that it is located in the fuse accommodation space, and the fuse may be mounted on the fuse mounting portion.

The substrate body may be located on the busbar frame, the substrate extension portion may include a first substrate extension portion extended downward from the substrate body, and a second substrate extension portion extended from the first substrate extension portion in a direction facing away from the busbar frame, and the fuse mounting portion may include a first fuse mounting portion bent from the second substrate extension portion and extended toward the busbar frame to form a space between the first fuse mounting portion and the second substrate extension portion, and a second fuse mounting portion extended upward from the first fuse mounting portion so that the second fuse mounting portion is located adjacent to the first substrate extension portion.

The battery module may further include a connector mounted on the second substrate extension portion, the connector including a connector pin having an end portion located in the space between the second substrate extension portion and the third substrate extension portion.

The bending portion may include a branch portion extended from the second fuse mounting portion in a direction perpendicular to an extension direction of the second fuse mounting portion, the branch portion having a busbar side end portion, and the fuse may be mounted between the connector and the busbar side end portion in a circuit connecting the connector to the busbar side end portion.

The battery module may further include a gap filler located between the connector and the first substrate extension portion to prevent a contact between the connector and the first substrate extension portion.

The battery module may further include a stiffener located between the fuse mounting portion and the first substrate extension portion to prevent a contact between the second fuse mounting portion and the first substrate extension portion.

The stiffener may include a stiffener body having a width that is equal to or greater than a width of the first substrate extension portion or the second fuse mounting portion.

The stiffener may include a mounting portion extended from the stiffener body, the mounting portion having a mounting hole, and the busbar frame may include a mounting protrusion passing through the mounting hole.

The battery module may further include a connector mounted on the second substrate extension portion, and a gap filler located between the connector and the first substrate extension portion to prevent a contact between the connector and the first substrate extension portion, and the mounting protrusion may pass through the connector and the gap filler.

A battery module according to an embodiment of the present disclosure includes a busbar, a busbar frame configured to mount the busbar, a substrate including a substrate body located adjacent to the busbar frame and a bending portion bent from the substrate body and extended to bring a busbar side end portion into contact with the busbar, a connector mounted on the bending portion, and a fuse mounted between the connector and the busbar side end portion in an extension direction of the bending portion, wherein the bending portion includes a substrate extension portion bent from the substrate body and extended in a direction facing away from the substrate body, and a fuse mounting portion extended from the substrate extension portion in a direction of getting closer to the substrate body, and located between the substrate extension portion and the busbar frame, and wherein the fuse is mounted on the fuse mounting portion and faces the busbar frame.

The substrate extension portion may be located such that a fuse accommodation space is formed between the substrate extension portion and the busbar frame, and the fuse accommodation space may have a width that is equal to or greater than a width of the fuse.

The fuse may be spaced 1.0 mm or more apart from the busbar frame.

The busbar frame may include a fuse facing portion that forms the fuse accommodation space, the fuse facing portion extended farther away from the bending portion as it goes toward the substrate body, and the fuse accommodation space may reduce in width as it is farther away from the substrate body.

A battery pack according to an embodiment of the present disclosure includes a battery module, and a pack case configured to accommodate the battery module, wherein the battery module includes a busbar, a busbar frame configured to mount the busbar, a substrate including a substrate body located adjacent to the busbar frame and a bending portion bent from the substrate body and extended to bring a busbar side end portion into contact with the busbar, and a fuse mounted on the bending portion, wherein the bending portion is located such that a fuse accommodation space is formed between the bending portion and the busbar frame, and wherein the fuse is located in the fuse accommodation space to avoid damage.

### ADVANTAGEOUS EFFECTS

The battery module according to an embodiment of the present disclosure and the battery pack including the same may accommodate the fuse in the fuse accommodation space between the bending portion and the busbar frame, thereby minimizing the increase in total volume of the battery module when the fuse is mounted on the substrate.

The battery module according to an embodiment of the present disclosure and the battery pack including the same may accommodate the fuse in the fuse accommodation space to prevent the exposure of the fuse to the outside of the battery module, thereby preventing cracks in the fuse.

The effects that can be obtained from the present disclosure are not limited to the aforementioned effects, and these and other effects will be clearly understood by persons having ordinary skill in the technical field pertaining to the present disclosure from the following description.

### BRIEF DESCRIPTION OF THE DRAWINGS

FIG. 1 is a perspective view showing a battery module according to a first embodiment of the present invention.
FIG. 2 is an exploded view of the battery module shown in FIG. 1.
FIG. 3 is an enlarged exploded view of a substrate shown in FIG. 2 and components related to the substrate.
FIG. 4 is an enlarged perspective view of the substrate shown in FIG. 3 when viewed from a different angle.
FIG. 5 is a cross-sectional view of the battery module shown in FIG. 1, taken along the line V-V'.
FIG. 6 is a cross-sectional view of the battery module shown in FIG. 1, taken along the line VI-VI'.
FIG. 7 is a perspective view showing a stiffener shown in FIG. 5.
FIG. 8 is a perspective view showing a battery pack including the battery module shown in FIG. 1.
FIG. 9 is a cross-sectional view showing a battery module according to a second embodiment of the present invention.
FIG. 10 is a cross-sectional view showing a battery module according to a third embodiment of the present invention.
FIG. 11 is a cross-sectional view showing a battery module according to a fourth embodiment of the present invention.
FIG. 12 is a cross-sectional view showing a battery module according to a fifth embodiment of the present invention.
FIG. 13 is a cross-sectional view showing a battery module according to a sixth embodiment of the present invention.
FIG. 14 is a cross-sectional view showing a battery module according to a seventh embodiment of the present invention.

### DETAILED DESCRIPTION

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B", "at least one of A and B", "at least one of A or B", "A, B or C", "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first", "second" and so on may be simply used to distinguish the corresponding element from the corresponding other embodiment, and are not intended to limit the corresponding elements in another aspect (for example, importance or order).

When a certain (for example, first) element is referred to as being "coupled" or "connected" to another (for example, second) element with or without the term "functionally" or "through communication", the element may be connected to the other element directly (for example, wiredly), wirelessly or through a third element.

The term "comprise", "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to", "being coupled to", "being supported by" or "contacting" another element, this includes the cases in which the elements are directly connected, coupled, supported or contacted with each other and they are indirectly connected, coupled, supported or contacted with each other through a third element.

When an element is referred to as being located "on" another element, the element can contact the other element and intervening elements may be present.

Meanwhile, the terms "up-down direction", "down", and "front-rear direction" as used herein are defined on the basis of the drawings, and the shape and location of each element is not limited by these terms.

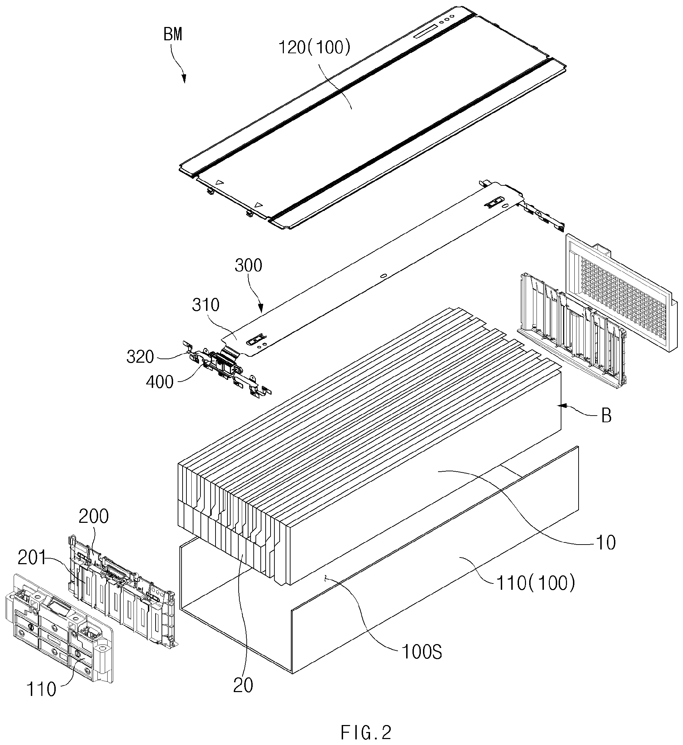

Specifically, as shown in FIG. 2, a direction in which a secondary battery B is accommodated in a module case 100 may be defined as down side, a length direction of the secondary battery B may be defined as front side, and on the basis of the definition, up side, rear side, left side and right side may be defined.

Hereinafter, the embodiments according to the present disclosure will be described in detail with reference to the accompanying drawings.

### First embodiment

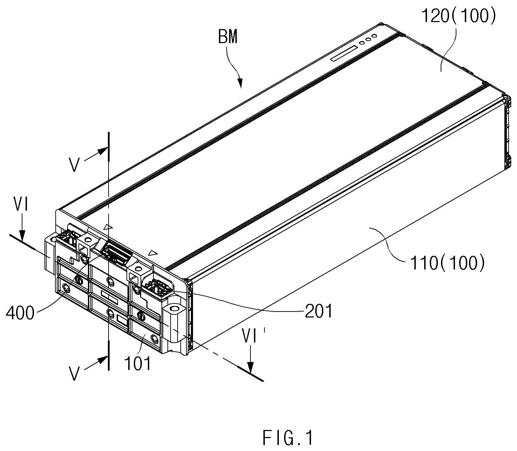

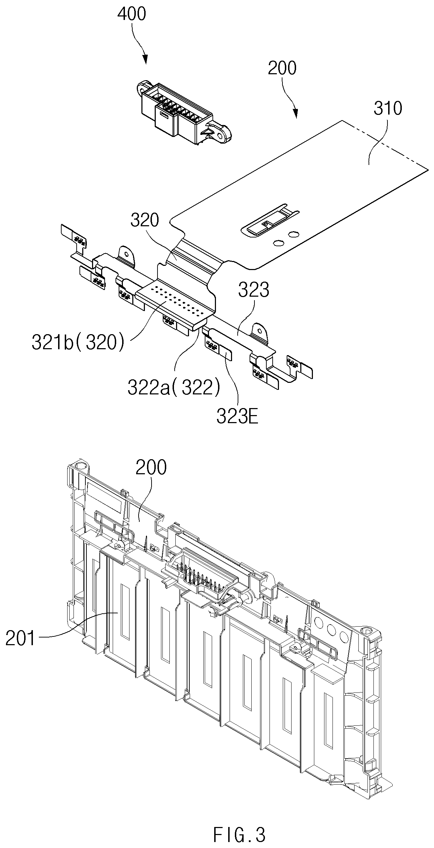

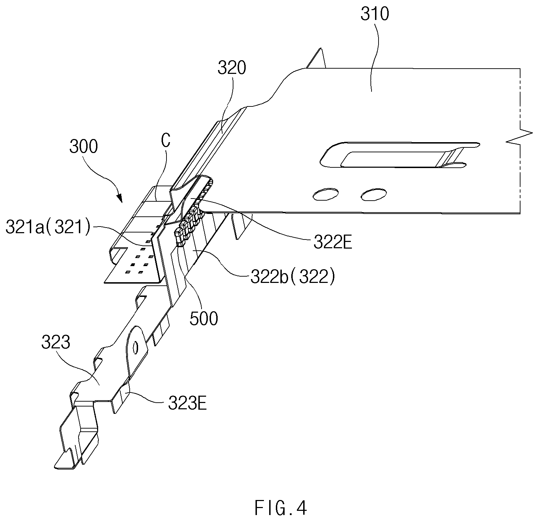

FIG. 1 is a perspective view showing a battery module BM according to a first embodiment of the present disclosure. FIG. 2 is an exploded view of the battery module BM shown in FIG. 1. FIG. 3 is an enlarged exploded view of a substrate 300 shown in FIG. 2 and components related to the substrate 300. FIG. 4 is an enlarged perspective view of the substrate 300 shown in FIG. 3 when viewed from a different angle.

Referring to FIGS. 1 to 4, the battery module BM according to the first embodiment of the present disclosure will be described.

As shown in FIG. 1, one battery module BM may be provided. As shown in FIG. 2, the battery module BM may include at least one secondary battery B. The secondary battery B will be first described.

As shown in FIG. 2, the secondary battery B may include an electrode assembly (not shown). The electrode assembly may be formed by stacking an electrode (not shown) and a separator (not shown) in an alternating manner. First, a slurry including an electrode active material, a binder and a plasticizer may be applied to a positive current collector and a negative current collector to manufacture the positive and negative electrodes, respectively. Additionally, the separators may be stacked between the electrodes to form the electrode assembly, and the electrode assembly may be inserted into a battery case 10, followed by electrolyte injection and sealing.

More specifically, the electrode assembly may include an electrode tab extended from an end portion of the current collector, and the plurality of electrode tabs included in the plurality of electrodes may be coupled into one. The end portion of the electrode tabs coupled may be coupled to an electrode lead 20. The electrode lead 20 may have one end coupled to the electrode tab and located inside of the battery case 10, and the other end located outside of the battery case 10. That is, the electrode lead 20 may pass through the battery case 10. Accordingly, electricity produced from the electrode may be transmitted to the electrode lead 20 through the electrode tab.

The secondary battery B may be accommodated in the module case 100. That is, the battery module BM may include the module case 100 configured to accommodate at least one secondary battery B. The plurality of secondary batteries B may be stacked in a direction. The module case 100 may have a shape that conforms to the shape of the plurality of secondary batteries B. That is, the module case 100 may have a battery accommodation space 100S for accommodating the plurality of secondary batteries B. The module case 100 may include a module case body 110 having a "U" shape in cross section, and an opening in communication with the battery accommodation space 100S. The module case 100 may include a module case cover 120 to cover at least one of the openings formed in the module case body 110. For example, the module case body 110 may be configured to cover the lower surface and the left and right surfaces of the battery accommodation space 100S, and the module case cover 120 may have a plate shape to cover the upper surface of the battery accommodation space 100S. The battery accommodation space 100S may be covered with a busbar frame 200 located at the front side and rear side of the module case body 110. That is, the battery module BM may include the busbar frame 200. A busbar 201 may be mounted on the busbar frame 200.

In the above-described secondary battery B, electricity produced from the electrode may move to the electrode lead 20 through the electrode tab. To control the current output from the electrode lead 20 of each of the plurality of secondary batteries B, the end portion of each electrode lead 20 may contact the busbar 201. The busbar 201 may include a plurality of busbars 201 each corresponding to each of the electrode leads 20. The busbar 201 may be, for example, a metal plate having a plate shape. The electrode lead 20 may be thinner than the busbar 201, and accordingly the electrode lead 20 is not immobilized, which makes it difficult to control. When the electrode lead 20 contacts the busbar 201, and current from the electrode lead 20 flows through the busbar 201, a component requiring electricity may be supplied with electricity by contacting the busbar 201. As the busbar 201 may be thicker than the electrode lead 20, electrical connection may be established more easily than direct electrical connection to the electrode lead 20. The busbar 201 may be mounted and fixed to the busbar frame 200. The busbar 201 may be coupled to the busbar frame 200 by an interference fit. However, it should be understood that the present disclosure is not limited thereto, and the aspect of the present disclosure may be applied to the cases where the busbar 201 coupled to the busbar frame 200 by a coupler or an adhesive. Parts of the plurality of busbars 201 may be exposed to the outside of an end plate 101 as described below, to allow the component requiring electricity to be easily connected to the busbar 201.

The battery module BM may include the end plate 101 to cover at least part of the busbar 201 or the busbar frame 200. By the end plate 101, it may be possible to prevent an unwanted component from contacting the busbar 201, thereby preventing electricity of the busbar 201 from flowing to another component, and preventing damage to the busbar 201.

The battery module BM may include the plurality of secondary batteries B, and the plurality of secondary batteries B may have different voltages during operation. When the plurality of secondary batteries B has the same voltage, the state of charge of each secondary battery B may be equally maintained, and accordingly, when charging the plurality of secondary batteries B, they may be equally charged. That is, when the voltage of some of the plurality of secondary batteries B is much lower than the voltage of the other secondary batteries B, it may be necessary to charge all the plurality of secondary batteries B, and in this case, the plurality of secondary batteries B did not use up their electrical energy, but they are required to charge, so the charge capacity may seem lower than the actual charge capacity. Further, the voltage of the plurality of secondary batteries B above a preset value may be recognized as a sign that side reaction occurred in some of the plurality of secondary batteries B. Accordingly, it may be necessary to monitor the voltage of the plurality of secondary batteries B.

To this end, as shown in FIG. 3, the battery module BM may include the substrate 300 configured to contact the busbar 201 in which electricity of the plurality of secondary batteries B flows, and a connector 400 may be mounted on the substrate 300 and connected to a Battery Management System (BMS) configured to monitor the voltage of the secondary battery B. The BMS may be electrically connected to the connector 400, and the information associated with the voltage received by the substrate 300 that contacts the busbar 201 may be transmitted to the BMS through the connector 400 and the BMS may receive the information associated with the voltage of the secondary battery B. The BMS may control each of the plurality of secondary batteries B based on the received voltage information associated with each of the plurality of secondary batteries B so that each of the plurality of secondary batteries B has the preset range of voltage.

In this instance, as shown in FIG. 4, the end portion of the substrate 300 that contacts the busbar 201 may be defined as a busbar side end portion 323E. Additionally, the busbar side end portion 323E and the part of the substrate 300 on which the connector 400 is mounted may be connected by a voltage transmission circuit C. The electric current may flow in the voltage transmission circuit C. When at least some of the plurality of secondary batteries B show abnormal reaction, overcurrent may flow in the voltage transmission circuit C. When the produced overcurrent flows to the BMS along the connector 400, the BMS may fail. To prevent this, the battery module BM may include a fuse 500 located between part of the voltage transmission circuit C where the connector 400 is connected and the busbar side end portion 323E. The fuse 500 may be defined as a component that shuts off the current when the current flows over a predetermined range.

When the battery module BM includes the fuse 500, because the fuse 500 is the component having volume, the fuse 500 may bring about an increase in the volume of the battery module BM. When the volume of the battery module BM increases, the volume occupied by the battery module BM increases in a device in which the battery module BM is loaded, resulting in lower total energy density. Further, when a plurality of battery modules BM is loaded, the increased volume of the battery module BM may cause a reduction in the number of battery modules BM that can be loaded, or a reduction in the size of the secondary battery B that is accommodated in the battery module BM. Accordingly, even though the fuse 500 having volume is added, there may be a need to prevent the substantial influence of the increased volume by the fuse 500 on the loading of other battery module BM, or the reduction in size of the secondary battery B.

Further, when overcurrent flows, the fuse 500 may be configured to shut off the electric current by intentional blowing, and when the fuse 500 is subjected to shock by the application of an unwanted external force to the fuse 500, the fuse 500 may be damaged, and the electric current may be shut off although overcurrent does not flow. When the fuse 500 is damaged, it is necessary to repair the entire device using the battery module BM, causing user inconvenience. To prevent this, there is a need to prevent damage to the fuse 500. To this end, the present disclosure was proposed.

The present disclosure relating to the fuse 500 that minimizes an increase in volume of the battery module BM, and avoids damage will be described below.

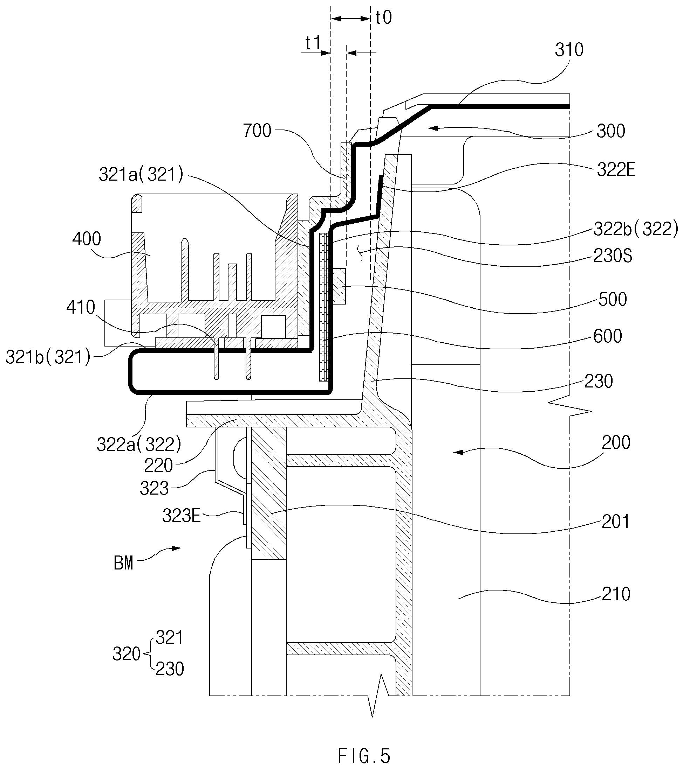

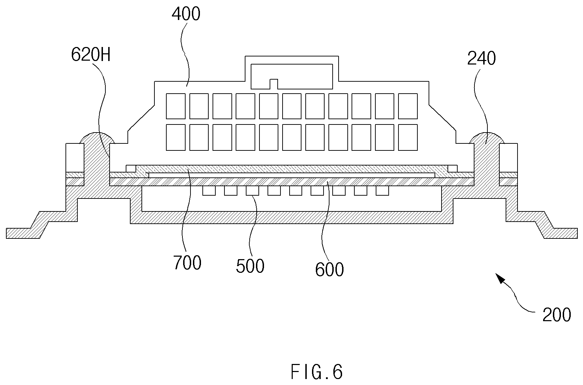

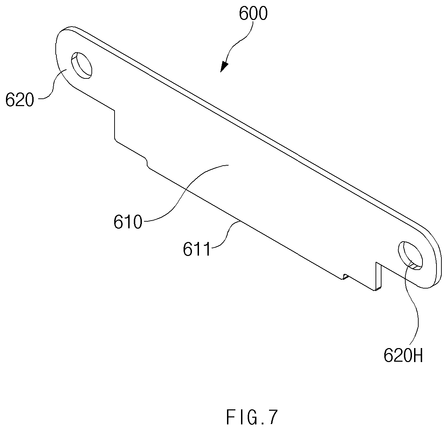

FIG. 5 is a cross-sectional view of the battery module BM shown in FIG. 1, taken along the line V-V'. FIG. 6 is a cross-sectional view of the battery module BM shown in FIG. 1, taken along the line VI-VI'. FIG. 7 is a perspective view showing a stiffener 600 shown in FIG. 5.

The battery module BM according to the first embodiment of the present disclosure will be described with reference to FIGS. 5 to 7.

Prior to the description of the fuse 500, the substrate 300 on which the fuse 500 is mounted will be described in further detail.

The substrate 300 may include a substrate body 310 located at the battery accommodation space 100S as shown in FIG. 2. The substrate body 310 may be, for example, located on the secondary battery B. The substrate body 310 may be extended along a direction in which the battery case 10 of the secondary battery B is extended. The end portion of the substrate body 310 may be located adjacent to the busbar frame 200. The substrate 300 may include a bending portion 320 bent from the substrate body 310 and extended toward the busbar 201 to bring it into contact with the busbar 201. The end portion of the bending portion 320 may be located in contact with the busbar 201. The connector 400 may be mounted on the bending portion 320. As the substrate body 310 is located at the battery accommodation space 100S, the substrate body 310 may not be exposed to the outside, making it difficult to connect the connector 400 to the substrate body 310. Accordingly, the connector 400 may be mounted on the bending portion 320 located such that it is exposed to the outside of the busbar frame 200. Here, one of the end portions of the bending portion 320 may be the busbar side end portion 323E configured to contact the busbar 201 as described above. Accordingly, the fuse 500 located between the connector 400 and the busbar side end portion 323E may be mounted on the bending portion 320.

In this instance, the bending portion 320 may be located to form a fuse accommodation space 230S with the busbar frame 200. In other words, at least part of the bending portion 320 may be spaced apart from the busbar frame 200. The fuse 500 may be accommodated in the fuse accommodation space 230S formed between the bending portion 320 and the busbar frame 200 spaced apart from each other. Accordingly, the fuse 500 may be located between the bending portion 320 and the busbar frame 200. Accordingly, as the exposure of the fuse 500 is prevented, it may be possible to prevent damage.

However, although the present disclosure describes that the fuse 500 is located at the bending portion 320 because it needs to be located between the connector 400 and the busbar side end portion 323E, there may be various reasons why the fuse 500 is mounted on the bending portion 320, and it is not limited to the description of the present disclosure. For convenience of description, the present disclosure describes the location of the fuse 500, but the fuse 500 may be mounted on the bending portion 320 irrespective of the presence or absence of the connector 400.

The fuse 500 may be protruded from the bending portion 320 toward the busbar frame 200. The end portion of the fuse 500 may face the busbar frame 200.

In this instance, the fuse accommodation space 230S may have a width that is equal to or greater than the width of the fuse 500. Accordingly, it may be possible to prevent the fuse 500 from contacting the busbar frame 200. Even though collision between the fuse 500 and an external component is prevented, so long as the fuse 500 is located adjacent to the busbar frame 200, the fuse 500 may be subjected to shock by contact with the busbar frame 200, but the fuse 500 may avoid shock by the above configuration.

Preferably, the fuse 500 may be spaced 1.0 mm or more apart from the busbar frame 200. It was experimentally confirmed that when a distance from the fuse 500 to the busbar frame 200 is smaller than 1.0 mm, damage to the fuse 500 exponentially increases. For reference, in this instance, the fuse 500 used in the experiment included the fuse 500 coating (not shown), and was 2 mm in thickness. Accordingly, the fuse 500 may be spaced at least 1.0 mm apart from the busbar frame 200. The fuse 500 farther away from the busbar frame 200 may represent a smaller probability that the fuse 500 will be subjected to shock by the busbar frame 200, but when the fuse 500 is far away from the busbar frame 200, the volume of the battery module BM increases accordingly. Accordingly, the preferred distance t0-t1 between the fuse 500 and the busbar frame 200 may be approximately 1.2 mm.

The busbar frame 200 may include a fuse facing portion 230 that forms the fuse accommodation space 230S, and is extended farther away from the bending portion 320 as it goes toward the substrate body 310. For example, the fuse facing portion 230 may be extended in the up-down direction. However, the fuse facing portion 230 may be extended in the up-down direction with a predetermined slope. As the fuse facing portion 230 slopes, the distance t0-t1 between the fuse 500 and the fuse facing portion 230 may be increased. For a further detailed description of the fuse facing portion 230, a busbar mounting portion 220 will be described.

The busbar frame 200 may include a busbar frame body 210. The busbar frame 200 may include the busbar mounting portion 220 protruded from the busbar frame body 210 to mount the busbar 201. For example, the busbar mounting portion 220 may be protruded forwards. The busbar mounting portion 220 may be located on the busbar 201, and the busbar 201 may be supported by the busbar mounting portion 220 located on the busbar 201 and a part of the busbar frame body 210 located below the busbar 201, and mounted on the busbar frame 200. To this end, the busbar mounting portion 220 may be further protruded frontwards than the busbar 201.

The fuse facing portion 230 may be extended upward from the busbar mounting portion 220. That is, the fuse facing portion 230 may be extended from the busbar mounting portion 220 toward the substrate body 310. The busbar mounting portion 220 and the fuse facing portion 230 may have an approximately "L" shape, and a part of the bending portion 320 of the substrate 300 may be accommodated in a space formed by the "L" shape of the busbar mounting portion 220 and the fuse facing portion 230. This space may be used to form the shape of the substrate 300 for mounting the connector 400. Further, when the space and the fuse accommodation space 230S overlap each other, there is no need for a space for forming the fuse accommodation space 230S, thereby eliminating the need to form an additional space for disposing the fuse 500. Accordingly, despite the fuse 500 is mounted, the increase of the space may be minimized. It will be described in more detail together with the related description.

Further, the above-described distance t0-t1 between the fuse 500 and the busbar frame 200 may be the distance t0-t1 between the fuse 500 and the fuse facing portion 230. The fuse accommodation space 230S may reduce in width t0 as it is farther away from the substrate body 310. The width of the fuse accommodation space 230S may be a width from a first substrate extension portion 321a as described below. Here, however, the smaller width of the fuse accommodation space 230S may be defined as a smaller width as the fuse accommodation space 230S is farther away from the substrate body 310 across the entire area as well as a predetermined area as shown in FIG. 5. However, despite this description, as opposed to FIG. 5, the entire fuse accommodation space 230S may be smaller in width t0 as it is farther away from the substrate body 310.

The fuse 500 may face a part located at an further inward in the extension direction than the end portion of the fuse facing portion 230. When the fuse 500 is located close to the end portion of the fuse facing portion 230, more specifically, when the fuse 500 is positioned at a location corresponding to a part where the width t0 of the fuse accommodation space 230S starts to reduce as it is farther away from the substrate body 310, the distance between the fuse 500 and the fuse facing portion 230 is maximum, thereby further preventing the contact between the fuse facing portion 230 and the fuse 500. However, as the fuse 500 is closer to the substrate body 310, it may be difficult to form the voltage transmission circuit C. The voltage transmission circuit C may include a part connecting the part where the connector 400 as described below is mounted to the fuse 500, and a part connecting the fuse 500 to the busbar side end portion 323E, and each part of the voltage transmission circuit C is longer as the fuse 500 is closer to the substrate body 310, making it difficult to form the circuit. Accordingly, the fuse 500 may meet the condition that it should be spaced apart from the fuse facing portion 230 with a predetermined gap or more from the end portion of the fuse facing portion 230, and may be preferably located at an inner position in the extension direction than the end portion of the fuse facing portion 230 so that it is not too close to the substrate body 310.

For the fuse 500 to be positioned at the above-described location, how the substrate 300 looks like may be also important. Hereinafter, the shape of the substrate 300 will be described.

As described above, the substrate 300 may include the substrate body 310 and the bending portion 320 bent and extended from the substrate body 310.

The bending portion 320 may include a substrate extension portion 321 bent from the substrate body 310 and extended in a direction facing away from the substrate body 310. The bending portion 320 may include a fuse mounting portion 322 extended from the substrate extension portion 321 in a direction of getting closer to the substrate body 310 so that it is located in the fuse accommodation space 230S. More specifically, the bending portion 320 may include a part that is getting far away from the substrate body 310 and a part that is getting closer to the substrate body 310. A certain space may be formed between the substrate extension portion 321 and the fuse mounting portion 322, and an end portion of a connector pin 410 as described below may be accommodated in the space. Further, for the fuse 500 to face the busbar frame 200, when the substrate 300 has a single sided printed circuit, not a double sided printed circuit, the substrate 300 gets far away from the end portion of the substrate 300 and gets closer to the end portion of the substrate 300 again, so the side of the substrate 300 facing away from the busbar frame 200 needs to face the busbar frame 200 again. Accordingly, the fuse 500 may be mounted on the surface facing the busbar frame 200 again, so the fuse 500 may be located facing the busbar frame 200. That is, the fuse 500 may be mounted on the fuse mounting portion 322. More preferably, the fuse 500 may be mounted on a second fuse mounting portion 322b as described below. However, the fuse 500 mounted on a first fuse mounting portion 322a is not excluded from the present disclosure, and it will be described as other embodiment than the first embodiment.

Below is a further detailed description.

The substrate extension portion 321 may include the first substrate extension portion 321a extended downward from the substrate body 310. A part of the first substrate extension portion 321a may be vertically extended downwards. The substrate extension portion 321 may include a second substrate extension portion 321b extended from the first substrate extension portion 321a in a direction facing away from the busbar frame 200. For example, the second substrate extension portion 321b may be extended frontward from the first substrate extension portion 321a.

The fuse mounting portion 322 may include the first fuse mounting portion 322a bent from the second substrate extension portion 321b and extended toward the busbar frame 200 to form a space between the first fuse mounting portion 322a and the second substrate extension portion 321b. For example, a part of the first fuse mounting portion 322a may be extended rearwards. The fuse mounting portion 322 may include the second fuse mounting portion 322b extended upward from the first fuse mounting portion 322a so that it is located adjacent to the first substrate extension portion 321a. For example, a part of the second fuse mounting portion 322b may be vertically extended upwards from the first fuse mounting portion 322a.

Further, the second fuse mounting portion 322b may include a mounting portion side end portion 322E that contacts the fuse facing portion 230. As the mounting portion side end portion 322E of the substrate 300 contacts the fuse facing portion 230 of the busbar frame 200, the fuse facing portion 230 may be supported by the busbar frame 200. As the fuse facing portion 230 is supported, the movement of the fuse facing portion 230 may be prevented, thereby preventing collision between the fuse 500 and the busbar frame 200 caused by the movement of the fuse facing portion 230.

The battery module BM may include the connector 400 that is mounted on the second substrate extension portion 321b. The connector 400 may include the connector pin 410 whose the end portion is located in the space between the second substrate extension portion 321b and the third substrate extension portion 321. The connector 400 may be the component for electrically connecting the BMS to the substrate 300 as described above. However, the present disclosure is not limited thereto, and the component that is supposed to be electrically connected to the substrate 300 may be connected to the substrate 300 when it is electrically connected to the connector 400. It should be understood that the present disclosure includes it. In addition, as shown in FIG. 5, the connector 400 may be the vertical connector 400 that is mounted on the substrate 300 in the vertical direction.

Taking the connector 400 into account, the fuse 500 described above may be mounted between the connector 400 and the busbar side end portion 323E in the circuit connecting the connector 400 to the busbar side end portion 323E, in other words, the voltage transmission circuit C.

In this instance, the bending portion 320 may include a branch portion 323 extended from the second fuse mounting portion 322b in a direction intersecting with the extension direction of the second fuse mounting portion 322b as shown in FIG. 4, and the branch portion 323 may include the busbar side end portion 323E. For example, the branch portion 323 may be extended from the second fuse mounting portion 322b in the left-right direction. Thus, the voltage transmission circuit C may be extended from the second substrate extension portion 321b to the first fuse mounting portion 322a, then to the fuse 500 mounted on the second fuse mounting portion 322b, and extended from the fuse 500 to the end portion of the branch portion 323, i.e., the busbar side end portion 323E along the second fuse mounting portion 322b and the branch portion 323.

In this instance, the connector 400 may be located close to the first substrate extension portion 321a as shown in FIG. 5. The battery module BM may include a gap filler 700 between the connector 400 and the first substrate extension portion 321a to prevent the contact between the connector 400 and the first substrate extension portion 321a. The gap filler 700 may support the connector 400 and the first substrate extension portion 321a while in contact with each of the connector 400 and the first substrate extension portion 321a. In the absence of the gap filler 700, the connector 400 and the first substrate extension portion 321a may contact each other, causing damage to the circuit in the first substrate extension portion 321a. In particular, when a gap is formed between the connector 400 and the first substrate extension portion 321a, by an external force, the connector 400 may be moved closer to the first substrate extension portion 321a, to apply shock to the first substrate extension portion 321a. Accordingly, the gap filler 700 may prevent it to protect the first substrate extension portion 321a.

The battery module BM may include the stiffener 600 between the fuse mounting portion 322 and the first substrate extension portion 321a to prevent the contact between the second fuse mounting portion 322b and the first substrate extension portion 321a. As described above, the second fuse mounting portion 322b may be located with the predetermined gap between the second fuse mounting portion 322b and the first substrate extension portion 321a. In the absence of the stiffener 600, by an external force, the first substrate extension portion 321a and/or the second substrate extension portion 321b may be moved so that the first substrate extension portion 321a and the second fuse mounting portion 322b get closer to each other, causing damage to the first substrate extension portion 321a and the second substrate extension portion 321b. The stiffener 600 may prevent it, thereby preventing damage to the first substrate extension portion 321a and the second substrate extension portion 321b. That is, the stiffener 600 may support the first substrate extension portion 321a and/or the second substrate extension portion 321b.

In particular, as shown in FIGS. 6 and 7, the stiffener 600 may include a stiffener body 610 having a width that is equal to or greater than the width of the first substrate extension portion 321a or the second fuse mounting portion 322b. Through this, it may be possible to further prevent the contact between the first substrate extension portion 321a and the second fuse mounting portion 322b.

Further, as shown in FIG. 7, the stiffener 600 may include a mounting portion 620 extended from the stiffener body 610, and having a mounting hole 620H. For example, the mounting portion 620 may include a pair of mounting portions 620 extended from the stiffener body 610 to the left and right. As shown in FIG. 6, the busbar frame 200 may include a mounting protrusion 240 passing through the mounting hole 620H. Accordingly, the stiffener 600 may be supported by the busbar frame 200.

As shown in FIG. 7, the stiffener 600 may include a support portion 611 configured to contact the first fuse mounting portion 322a so that it is supported by the first fuse mounting portion 322a. The support portion 611 may be extended from the stiffener body 610 in a direction facing away from the mounting portion 620. The width of the support portion 611 may be equal to or less than the width of the stiffener body. The width of the support portion 611 may correspond to the width of the first fuse mounting portion 322a.

As shown in FIG. 6, the mounting protrusion 240 may pass through the connector 400 and the gap filler 700. Accordingly, by the mounting protrusion 240, the connector 400, the gap filler 700 and the stiffener 600 may be supported at the same time. The stiffener 600 may be located such that the gap filler 700 is disposed between the stiffener 600 and the connector 400.

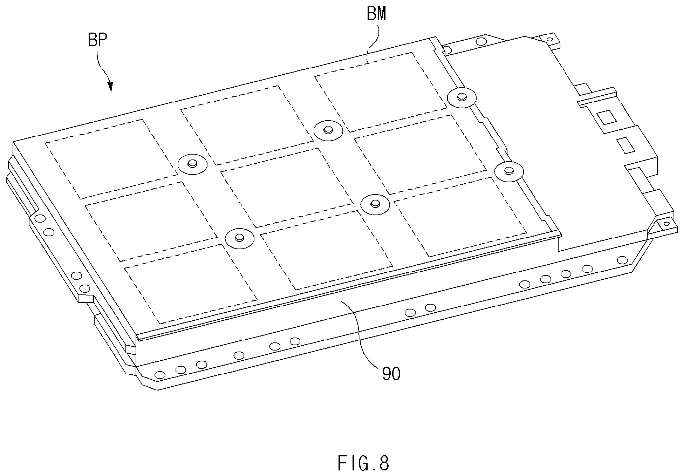

FIG. 8 is a perspective view showing a battery pack BP including the battery module BM shown in FIG. 1.

The battery pack BP according to the first embodiment of the present disclosure will be described with reference to FIG. 8.

A plurality of battery modules BM may form the battery pack BP.

The battery pack BP may include a pack case 90 configured to accommodate the battery module BM. A plurality of battery modules BM may be accommodated in the pack case 90.

Further, although it has been hereinabove described that the aspect of the present disclosure is applied to the battery module BM, the aspect of the present disclosure may be also applied to the battery pack BP. It should be understood that the fuse 500 according to the aspect of the present disclosure may be applied to the battery pack BP.

Hereinafter, different embodiment(s) from the first embodiment will be described. The common description to the first embodiment and the other embodiment(s) is omitted and the other embodiment(s) will be described based on difference(s). That is, it is obvious that when a certain description not mentioned in the other embodiments is necessary, the description of the first embodiment may make up for the description.

### Second embodiment

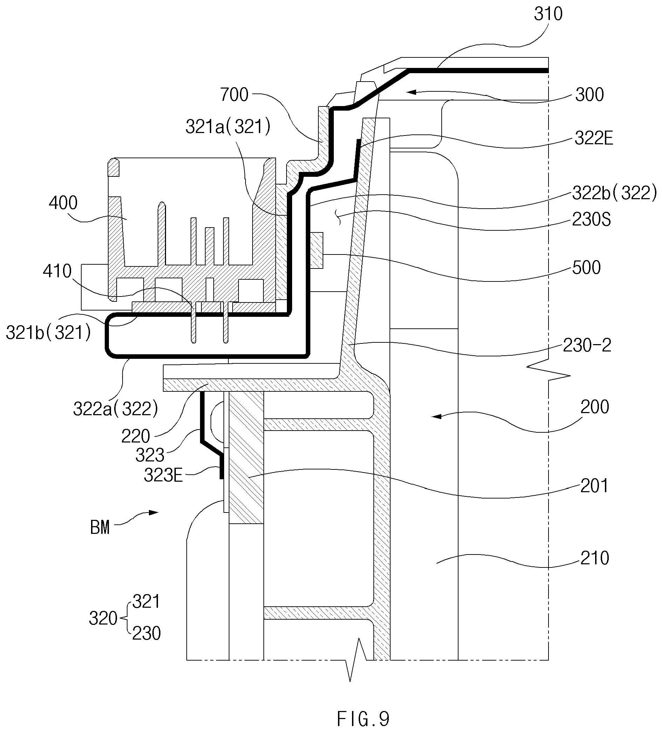

FIG. 9 is a cross-sectional view showing the battery module BM according to the second embodiment of the present disclosure.

The battery module BM according to the second embodiment of the present disclosure will be described with reference to FIG. 9.

The battery module BM according to the second embodiment is different from the first embodiment in that the stiffener 600 is absent. Even though the stiffener 600 is absent, the fuse 500 may not bring about the increase of the space or may avoid damage. Further, aside from the absence of the stiffener 600, even if there is no component such as the gap filler 700, the aspect of the present disclosure may be applied.

### Third embodiment

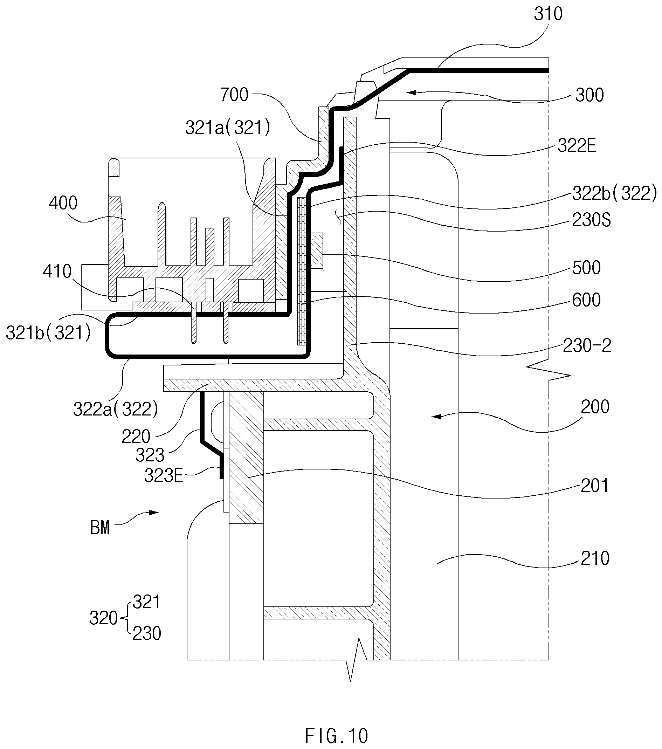

FIG. 10 is a cross-sectional view showing the battery module BM according to the third embodiment of the present disclosure.

The battery module BM according to the third embodiment of the present disclosure will be described with reference to FIG. 10.

The battery module BM according to the third embodiment is different from the first embodiment in that the fuse facing portion 230 does not slope. The fuse facing portion 230 may be extended perpendicularly to the busbar mounting portion 220. Even if the fuse facing portion 230 is perpendicular to the busbar mounting portion 220 though, when the fuse 500 and the fuse facing portion 230 are spaced apart from each other as much as necessary, it may be still possible to prevent damage to the fuse 500.

### Fourth embodiment

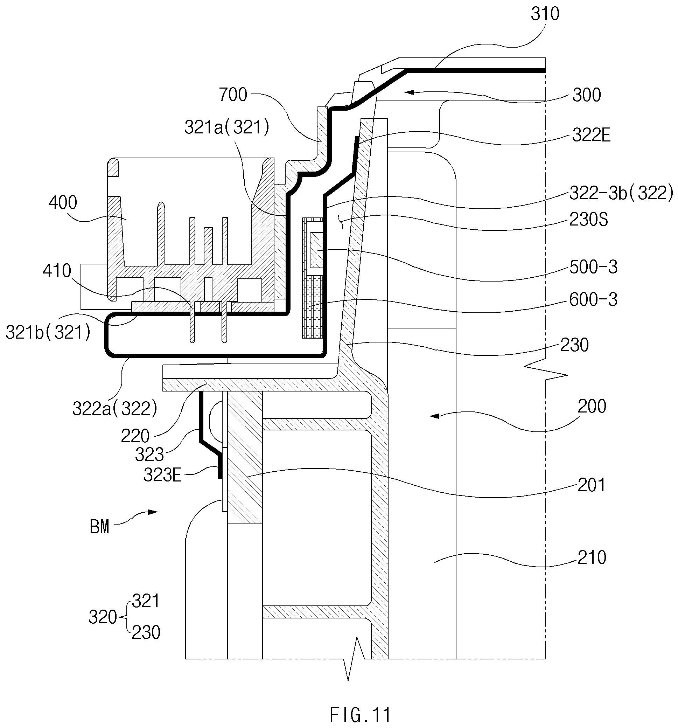

FIG. 11 is a cross-sectional view showing the battery module BM according to the fourth embodiment of the present disclosure.

The battery module BM according to the fourth embodiment of the present disclosure will be described with reference to FIG. 11.

The battery module BM according to the fourth embodiment is different from the first embodiment in the direction in which the fuse 500 is mounted on the substrate 300. More specifically, the fuse 500 may be mounted on the side of the second fuse mounting portion 322b opposite to the fuse facing portion 230. In this case, the substrate 300 may include a printed circuit on both sides, not one side.

That is, the fuse 500 may be located between the first substrate extension portion 321a and the second fuse facing portion 230. In this instance, the fuse 500 may be accommodated in the stiffener 600. The stiffener 600 may maintain the predetermined gap or more between the first substrate extension portion 321a and the second fuse facing portion 230, and at the same time, the stiffener 600 of the fourth embodiment may cover the fuse 500 to prevent damage to the fuse 500.

### Fifth embodiment

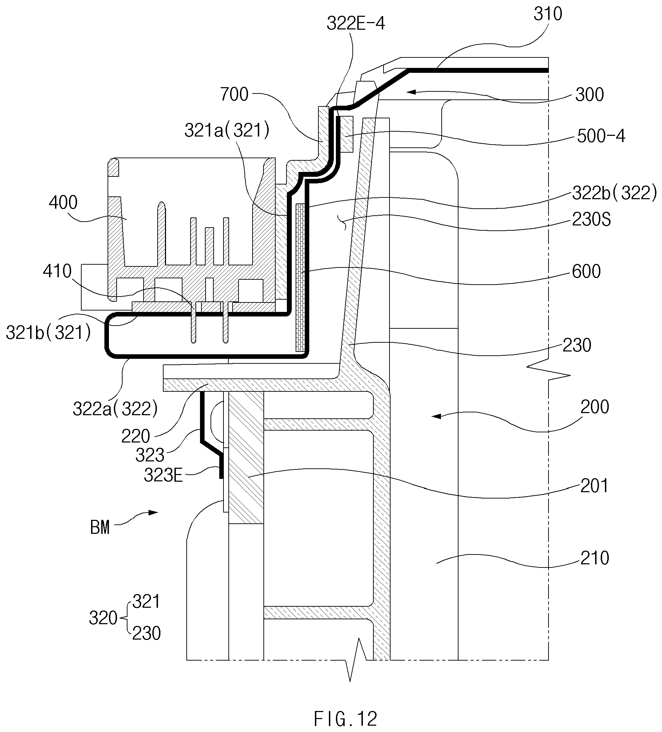

FIG. 12 is a cross-sectional view showing the battery module BM according to the fifth embodiment of the present disclosure.

The battery module BM according to the fifth embodiment of the present disclosure will be described with reference to FIG. 12.

The battery module BM according to the fifth embodiment is different from the first embodiment in that the fuse 500 faces the end portion of the fuse facing portion 230. As described above in the first embodiment, the location of the fuse 500 has a disadvantage that the voltage transmission circuit C is somewhat longer, but meaningfully it may be possible to ensure diversity in the location of the fuse 500.

### Sixth embodiment

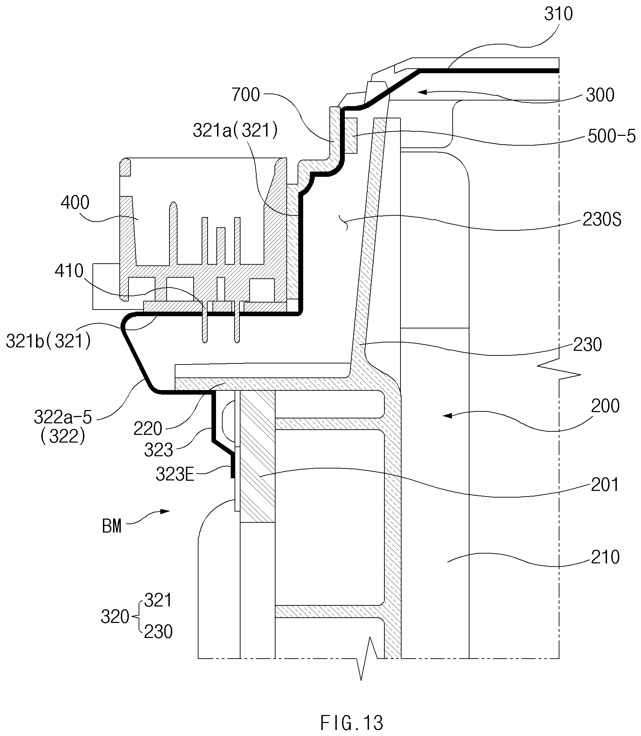

FIG. 13 is a cross-sectional view showing the battery module BM according to the sixth embodiment of the present disclosure.

The battery module BM according to the sixth embodiment is distinct in that the fuse 500 is mounted on the side of the first substrate extension portion 321a facing the fuse facing portion 230. In this case, to dispose the fuse 500 in the fuse accommodation space 230S, the shape of the bending portion 320 need not be complex. However, in this case, the substrate 300 may have circuits on both sides, not one side.

In the case of the sixth embodiment, the bending portion 320 does not need to further extend toward the fuse accommodation space 230S, so the fuse mounting portion 322 may not be provided, and accordingly, the second substrate extension portion 321b may be directly extended toward the busbar 201.

Also in this case, in the same way as the first embodiment, the fuse 500 is mounted on the bending portion 320. Further, although not shown in FIG. 13, the fuse 500 may be mounted on the inner surface of the second substrate extension portion 321b, not the first substrate extension portion 321a, and it should be understood that the present disclosure encompasses the disclosed aspect.

### Seventh embodiment

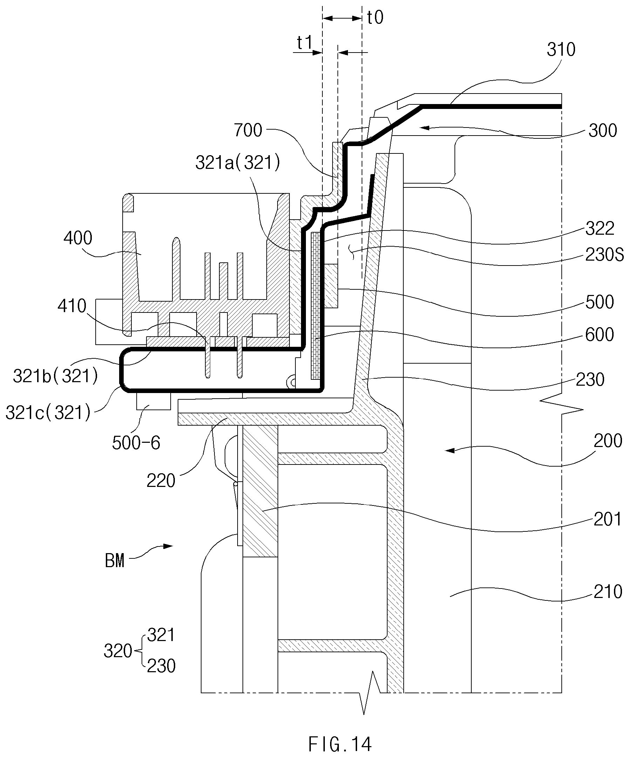

FIG. 14 is a cross-sectional view showing the battery module BM according to the seventh embodiment of the present disclosure.

The battery module BM according to the seventh embodiment of the present disclosure will be described with reference to FIG. 14.

The battery module BM according to the seventh embodiment is different from the first embodiment in that the fuse 500 is mounted on the first fuse mounting portion 322a, not the second fuse mounting portion 322b.

The fuse mounting portion 322 may be configured to face or become near the busbar 201 as it gets closer to the substrate body 310. In the first embodiment, such configuration was described, taking the above-described second fuse mounting portion 322b as a typical example, while as in the seventh embodiment, the first fuse mounting portion 322a may have a side close to the busbar 201. Describing in further detail, the first fuse mounting portion 322a may have a part where the other side than the side facing the busbar 201 faces the busbar 201 in the single-sided printed circuit. Accordingly, the fuse 500 may be mounted on the first fuse mounting portion 322a.

In this case, the fuse accommodation space 230S may be seen as being formed between the second substrate extension portion 321b and the busbar mounting portion 220.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the appended claims and their equivalent scope.

### [List of Reference Numerals]

B: Secondary battery
10: Battery case
20: Electrode lead
BP: Battery pack
90: Pack case
BM: Battery module
100: Module case
100S: Battery accommodation space
101: End plate
110: Module case body
120: Module case cover
200: Busbar frame
201: Busbar
210: Busbar frame body
220: Busbar mounting portion
230: Fuse facing portion
230S: Fuse accommodation space
240: Mounting protrusion
300: Substrate
310: Substrate body
320: Bending portion
321: Substrate extension portion
321a: First substrate extension portion
321b: Second substrate extension portion
322: Fuse mounting portion
322a: First fuse mounting portion
322b: Second fuse mounting portion
322E: Mounting portion side end portion
323: Branch portion
323E: Busbar side end portion
400: Connector
410: Connector pin
500: Fuse
600: Stiffener
610: Stiffener body
611: Support portion
620: Mounting portion
620H: Mounting hole
700: Gap filler
C: Voltage transmission circuit

## Claims

1. A battery module comprising:
a busbar;
a busbar frame configured to mount the busbar;
a substrate including a substrate body located adjacent to the busbar frame and a bending portion bent from the substrate body and extended to bring a busbar side end portion into contact with the busbar; and
a fuse mounted on the bending portion,
wherein the bending portion is located such that a fuse accommodation space is formed between the bending portion and the busbar frame, and
wherein the fuse is located in the fuse accommodation space to avoid damage.

2. The battery module according to claim 1,
wherein the fuse is protruded from the bending portion toward the busbar frame.

3. The battery module according to claim 1,
wherein the fuse accommodation space has a width that is equal to or greater than a width of the fuse.

4. The battery module according to claim 1,
wherein the fuse is spaced 1.0 mm or more apart from the busbar frame.

5. The battery module according to claim 1,
wherein the busbar frame includes a fuse facing portion that forms the fuse accommodation space, the fuse facing portion extended farther away from the bending portion as it goes toward the substrate body, and
wherein the fuse accommodation space reduces in width as it is farther away from the substrate body.

6. The battery module according to claim 5,
wherein the fuse faces a part located at an inner position in an extension direction than an end portion of the fuse facing portion.

7. The battery module according to claim 1,
wherein the bending portion includes:
a substrate extension portion bent from the substrate body and extended in a direction facing away from the substrate body; and
a fuse mounting portion extended from the substrate extension portion in a direction of getting closer to the substrate body so that it is located in the fuse accommodation space, and
wherein the fuse is mounted on the fuse mounting portion.

8. The battery module according to claim 7,
wherein the substrate body is located on the busbar frame,
wherein the substrate extension portion includes:
a first substrate extension portion extended downward from the substrate body; and
a second substrate extension portion extended from the first substrate extension portion in a direction facing away from the busbar frame, and
wherein the fuse mounting portion includes:
a first fuse mounting portion bent from the second substrate extension portion and extended toward the busbar frame to form a space between the first fuse mounting portion and the second substrate extension portion; and
a second fuse mounting portion extended upward from the first fuse mounting portion so that the second fuse mounting portion is located adjacent to the first substrate extension portion.

9. The battery module according to claim 8, further comprising:
a connector mounted on the second substrate extension portion, the connector including a connector pin having an end portion located in the space between the second substrate extension portion and the third substrate extension portion.

10. The battery module according to claim 9,
wherein the bending portion includes a branch portion extended from the second fuse mounting portion in a direction perpendicular to an extension direction of the second fuse mounting portion, the branch portion having a busbar side end portion, and
wherein the fuse is mounted between the connector and the busbar side end portion in a circuit connecting the connector to the busbar side end portion.

11. The battery module according to claim 9, further comprising:
a gap filler located between the connector and the first substrate extension portion to prevent a contact between the connector and the first substrate extension portion.

12. The battery module according to claim 8, comprising:
a stiffener located between the fuse mounting portion and the first substrate extension portion to prevent a contact between the second fuse mounting portion and the first substrate extension portion.

13. The battery module according to claim 12,
wherein the stiffener includes a stiffener body having a width that is equal to or greater than a width of the first substrate extension portion or the second fuse mounting portion.

14. The battery module according to claim 13,
wherein the stiffener includes a mounting portion extended from the stiffener body, the mounting portion having a mounting hole, and
wherein the busbar frame includes a mounting protrusion passing through the mounting hole.

15. The battery module according to claim 14, further comprising:
a connector mounted on the second substrate extension portion; and
a gap filler located between the connector and the first substrate extension portion to prevent a contact between the connector and the first substrate extension portion,
wherein the mounting protrusion passes through the connector and the gap filler.

16. A battery module comprising:
a busbar;
a busbar frame configured to mount the busbar;
a substrate including a substrate body located adjacent to the busbar frame and a bending portion bent from the substrate body and extended to bring a busbar side end portion into contact with the busbar;
a connector mounted on the bending portion; and
a fuse mounted between the connector and the busbar side end portion in an extension direction of the bending portion,
wherein the bending portion includes:
a substrate extension portion bent from the substrate body and extended in a direction facing away from the substrate body; and
a fuse mounting portion extended from the substrate extension portion in a direction of getting closer to the substrate body, and located between the substrate extension portion and the busbar frame, and
wherein the fuse is mounted on the fuse mounting portion and faces the busbar frame.

17. The battery module according to claim 16,
wherein the substrate extension portion is located such that a fuse accommodation space is formed between the substrate extension portion and the busbar frame, and
wherein the fuse accommodation space has a width that is equal to or greater than a width of the fuse.

18. The battery module according to claim 16,
wherein the fuse is spaced 1.0 mm or more apart from the busbar frame.

19. The battery module according to claim 17,
wherein the busbar frame includes a fuse facing portion that forms the fuse accommodation space, the fuse facing portion extended farther away from the bending portion as it goes toward the substrate body, and
wherein the fuse accommodation space reduces in width as it is farther away from the substrate body.

20. A battery pack comprising:
a battery module; and
a pack case configured to accommodate the battery module,
wherein the battery module includes:
a busbar;
a busbar frame configured to mount the busbar;
a substrate including a substrate body located adjacent to the busbar frame and a bending portion bent from the substrate body and extended to bring a busbar side end portion into contact with the busbar; and
a fuse mounted on the bending portion,
wherein the bending portion is located such that a fuse accommodation space is formed between the bending portion and the busbar frame, and
wherein the fuse is located in the fuse accommodation space to avoid damage.
